Europäisches Patentamt

(19) **European Patent Office**

**Office européen des brevets**

(11) Publication number: **0 212 455**
**B1**

(12) # EUROPEAN PATENT SPECIFICATION

(45) Date of publication of the patent specification:
**31.10.90**

(51) Int. Cl.⁵: **G01N 21/64**, G01N 33/53

(21) Application number: **86110884.3**

(22) Date of filing: **06.08.86**

(54) **Fluorescence detection apparatus for immunoassay.**

(30) Priority: **07.08.85 JP 173895/85**

(43) Date of publication of application:
**04.03.87 Bulletin 87/10**

(45) Publication of the grant of the patent:
**31.10.90 Bulletin 90/44**

(84) Designated Contracting States:
**BE DE FR GB IT NL**

(56) References cited:
**EP-A- 0 054 001**
**EP-A- 0 054 001**
**EP-A- 0 071 991**
**EP-A- 0 071 991**
**EP-A- 0 103 426**
**FR-A- 2 522 150**
**US-A- 3 814 939**

**JOURNAL OF PHYSICS E. SCIENTIFIC INSTRUMENTS,
vol. 13, no. 6. June 1980, pages 651-654, London, GB; W.
SCHMIDT et al.: "A computerised experiment for the
measurement of excitation spectra-comparison of
pulsed and CW dye laser use"
ANALYTICAL CHEMISTRY, vol. 55, no. 6, May 1983,
pages 878-881; W.E. HOWARD et al.: "Automated
instrumentation for fluorescence assays on reagent**

(73) Proprietor: **TOSOH CORPORATION, 4560, Oaza-Tonda
Shinnanyo-shi, Yamaguchi 746(JP)**

(72) Inventor: **Hayashi, Hidechika, 19 Tokiwadai 1-chome
Hodogaya-ku, Yokohama-shi Kanagawa(JP)**

(74) Representative: **Patentanwälte Grünecker, Kinkeldey,
Stockmair & Partner, Maximilianstrasse 58,
D-8000 München 22(DE)**

(56) References cited: (continuation)
**strips"
APPLIED OPTICS, vol. 22, no. 1, January 1983,
pages 48-53, New York, US; P. BURLAMACCHI et al.:
"Performance evaluation of UV sources for lidar
fluorosensing of oil films"**

## Description

The present invention relates to a fluorescence detection apparatus in accordance with the generic clause of Claim 1.

Such a fluorescence detection apparatus is known from EP-A 0 054 001. This reference relates to a fluorometer which monitors the development of microorganisms by using fluorescence. The fluorometer comprises an optical system with a pulse light source, a fluorescence sensor and a reference sensor both being synchronous with the emission of light. A Xenon flash lamp is used as pulse light source. The fluorometer is of a single-channel type and variations in the intensity of the light source are corrected by relating a signal of the fluorescence sensor to a corresponding signal of the reference detector.

A further fluorescence apparatus is known from FR-A 2 522 150. It comprises an optical system with a pulse light source, a fluorescence sensor and a reference sensor. As light source a mode-lock cw-Ar ion laser and an AO module are used. A time division fluorescent measurement is conducted; the excitation and detection of fluorescent light are synchronized and the time period before fluorescence is detected, is determined.

A further reference, EP-A 0 071 991, discloses a fluorescence detection appartus comprising a continuous light source (e.g. U.V. lamp) and a plurality of photo detectors for measuring fluorescence light guided by a system using optical fibers.

There is a further reference, EP-A 0 103 426, which discloses a disposable cell which is used for performing immunoassay with fluorescence technique. The cell mentioned above comprises a capillary and an optical fiber to which an antigen-antibody complex is attached. A sample is drawn into the cell by capillary action. Then, a light propagates through an optical fiber to detect fluorescence. The optical system therein is realised by an embodiment of the top-top type which means that the directions of the light irradiated to the sample and extracted from the sample are the same.

Conventional immunological methods of detecting or measuring a minute amount of a biosubstance include those known as fluoroimmunoassay (hereinafter referred to as "FIA") or fluoroenzyme immunoassay (hereafter referred to as "FEIA") in which a fluorescence intensity of a fluorescent substance in a sample obtained by immunoreaction is measured. The former is a direct method of measuring a fluorescence intensity of fluorescent substance labeling the antigen-antibody complex. The latter is an indirect method labeling the antigen-antibody complex with an enzyme and measuring a fluorescence intensity of a fluorescent substance effected by the enzymatic activity.

In either one of these methods, use is made of a fluorescence detection apparatus such as a fluorophotometer which, for the purpose of measuring a fluorescence intensity of a fluorescent substance, includes a projector system for irradiating a sample including the fluorescent substance with light and a receiving and measuring system for receiving fluorescence emitted from the fluorescent substance as a result of light projection and for detecting or measuring the intensity of the fluorescence.

In such a fluorescence detection system, however, consideration must be given to error factors such as incidence of an external disturbance light into the photosensor, a dark current in the photosensor, and an offset of the amplifier. For example, the projector system and the photosensor must have a tightly closed structure for perfectly preventing the incidence of an external disturbance light. Further, a high sensitivity performance is required for the measurement of a very minute amount of a product of an immunoreaction, such a very minute amount is characteristic of the immunoreaction. Therefore, a number of difficulties are experienced in the construction of this type of fluorescence detection apparatuses.

In view of the above-mentioned problems, it is the object of the present invention to provide a highly durable, inexpensive fluorescence detection apparatus with a simple structure suitable for determining a very minute amount of a matter involed with a high sensitivity for the purpose of assaying an immunoreaction and efficiently detecting or measuring fluorescence intensities involved in many samples.

This object is solved by a fluorescence detection apparatus having the features of Claim 1. Preferred embodiments are disclosed in the dependent claims.

The above and other objects, effects, features and advantages of the present invention will become more apparent from the following description of preferred embodiments thereof taken in conjection with the accompanying drawings.

Fig. 1 is a diagram showing, partly in a block diagram, an embodiment of a fluorescence detection apparatus in accordance with the present invention;

Fig. 2 is a diagram illustrating wave forms in various portion of the apparatus shown in Fig. 1; and

Fig. 3 is a schematic perspective view showing a partial structure of another embodiment according to the present invention.

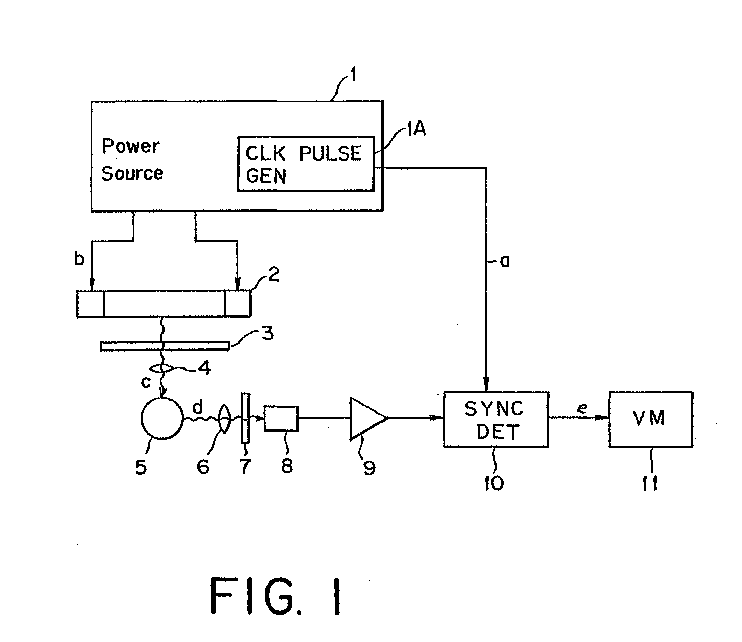

Fig. 1 shows an embodiment of a fluorescence detection apparatus in accordance with the present invention. In Fig. 1, a power source circuit 1 includes a clock pulse generator 1A from which a clock pulse signal $a$ is generated, and produces a pulse voltage $b$ at a frequency determined by the clock pulse signal $a$. The pulse voltage $b$ is applied from the power source circuit 1 to a fluorescent discharge tube 2, so that the fluorescent discharge tube 2 is intermittently energized to be lit by the pulse voltage $b$ at a predetermined frequency. The inside of a sample cell 5 is irradiated with light $c$ emitted from the fluorescent discharge tube 2 by a condenser lens 4 via a band-pass light filter 3 on the excitation side. The above-mentioned parts 1 to 4 constitute a projector system.

The sample cell 5 is filled with, for example, an antigen-antibody complex labelled by an enzyme and a substrate changeable into a fluorescent substance under the influence of the activity of the enzyme.

The assay may be carried out either after terminating the influence of the enzymatic activity, or while allowing the enzyme to continue to be active.

The product in the sample cell 5 is excited to generate a fluorescence $d$ having an intensity corresponding to the extent of the enzymatic activity when irradiated with a light emitted from the above-mentioned projector system.

The fluorescence $d$ emitted outside from the sample cell 5 is received by a photosensor 8 through a condenser lens 6 and a light filter 7 on the fluorescence side. A photodiode, a phototransistor, a photomultiplier or the like can be used as the photosensor 8. An electric signal obtained in accordance with characteristics of the type of the photosensor 8 used is supplied to a phase sensitive detector or a synchronous detector 10 via an amplifier 9. The phase sensitive detector 10 receives a clock pulse signal $a$ from the clock pulse generator 1A of the pulse voltage power source circuit 1 to detect a signal from the amplifier 9 in synchronism with the signal $a$, so that a fluorescent component of the product in the sample cell 5 which is excited by the light $c$ emitted from the light source 2 is detected, while effectively removing an influence of external light, a dark current, and an offset component. A signal $e$ obtained by phase sensitive or synchronous detection by means of the phase sensitive detector 10 is applied to a voltmeter 11. In the voltmeter 11, for example, an increment in fluorescence intensity during a given time range is measured and the increment is served as data for calculation of an amount of the antigen-antibody complex in the sample cell 5. The above-mentioned parts 6-11 constitute a receiving and measuring system.

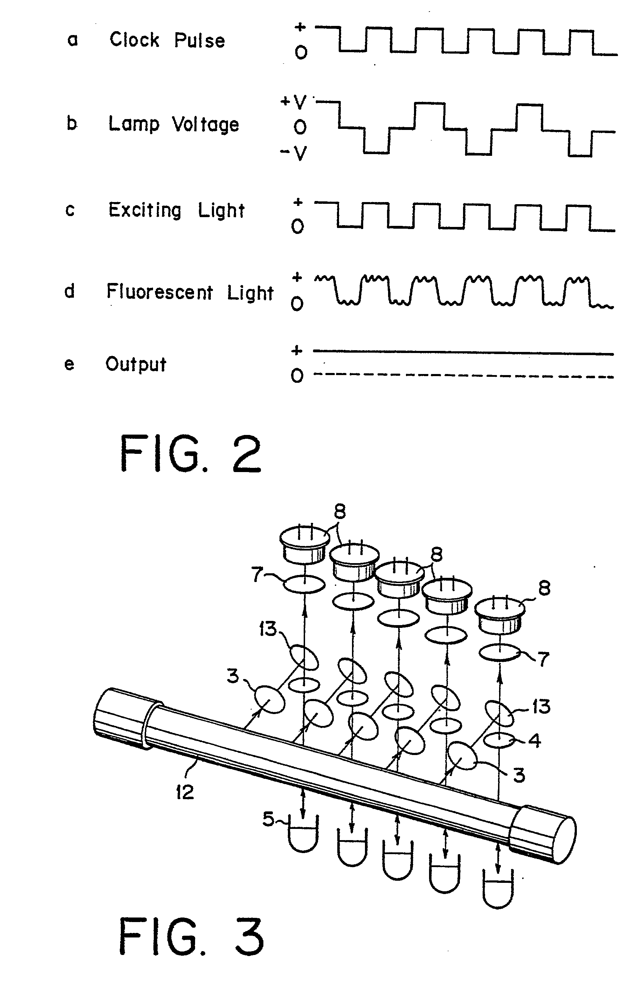

Fig. 2 illustrates waveforms of signals $a$, $b$, $c$, $d$ and $e$ appearing in the parts 1A, 1, 3, 5 and 10 of the apparatus described above, respectively.

According to the fluorescence detection apparatus having the construction as described above, a very minute amount of a biosubstance can be highly accurately detected or determined with little influence of a measurement error even in a place other than a dark place by a relatively simple arrangement having a fluorescent discharge tube 2 as a light source to be energized intermittently in accordance with application of a pulse voltage and a phase sensitive detector 10. Thus, the apparatus is practically advantageous.

The sample to be assayed by the apparatus of the present invention produces an antigen-antibody complex, for example, in a small cell or on a surface of a sheet according to an immunoreaction. The antigen-antibody complex may be labelled by either a fluorescent substance, or an enzyme which generates fluorescent product.

The projector system for irradiating a light source light in the apparatus in accordance with the present invention comprises an arrangement having an adequate combination of a light source and an optical system including a light filter, a mirror, a condenser lens, and so on together with means for energizing intermittently the light source. Although this energizing means may use a mechanical chopper which intermittently interrupts light by a rotary fan disposed in the light path of an irradiated light, it is desirable to have an arrangement having, as the light source lamp, an intermittent illuminating tube such as a mercury discharge tube or a fluorescent discharge tube which is intermittently energized by an AC or pulse electric power. While a frequency of intermittent light irradiation from the light source varies depending on type of light source used and frequency characteristics of the amplifier of the receiving and measuring system, it is generally satisfactory that the frequency is within a range from tens of Hz to tens of kHz.

The receiving and measuring system in the apparatus in accordance with the present invention comprises an arrangement having an adequate combination of an optical system including a mirror, a condenser lens, a light filter and so on, a photosensor, an amplifier, a voltmeter and so on together with a detector for performing phase sensitive detection of an electric signal derived from the photosensor, for example, by using a clock signal used to control voltage application to the fluorescent discharge tube or the like. The influences of external light, etc. can be removed from the signal obtained from the photosensor by the phase sensitive detection, so that a component of a fluorescence irradiated from the fluorescent substance in the sample excited with a light from the light source can be extracted according to the light from the light source. Thus, a fluorescence intensity can be detected highly accurately.

Further, in case that an external light affecting the fluorescence detection apparatus is emitted from a fluorescent lamp for general indoor illumination, it is preferable that the light source is intermittently energized at such a frequency that the frequency of harmonic of the light source light should not match that of the external light so as to decrease the effect of the external light as low as possible.

Fig. 3 shows another embodiment of an apparatus according to the present invention. In this embodiment, an elongated fluorescent discharge tube 12 is commonly disposed for a plurality of, for example, five photosensors 8 laterally aligned. A light emitted from the light source 12 is reflected by half mirrors or dichroic mirrors 13 via light filters 3 on the excitation side. The reflected lights are converged by condenser lenses 4 and then are incident to a plurality of, for example, five sample cells 5 which are separately disposed corresponding to the respective photosensors 8. The fluorescences emitted from the sample cells 5 are guided to the photosensors 8 via the lenses 4, the mirrors 13 and the light filters 7, respectively. Thus, this embodiment can be called a top-top type in which light irradiation to the sample cells 5 and light extraction from the sample cells 5 is made on the upper side. Since the other structure is substantially the same as in Fig. 1, description thereof will be omitted here.

In this embodiment, an intermittent light which is emitted from the light source and is incident to the respective sample cells 5 can be guided from a single projector system. In other words, it is not always necessary to dispose the light filters 3 and the mirrors 13 shown in Fig. 3 separately with respect to each of the sample cells 5. These separated provisions of the optical elements can be repleaced by a single integrated and elongated optical element. The condenser lenses 4 may be disposed on the incident side instead of the reflection side of the mirrors 13 as shown in Fig. 3.

The fluorescence detection apparatus of the present invention may adopt either the top-top type in which irradiation of a sample with a light emitted from the light source and extraction of fluorescence from the sample are made in the same direction (for example, in the upward direction) as shown in Fig. 3, or another type in which irradiation of a light emitted from the light source and extraction of fluorescence are made in different directions as shown in Fig. 1. The former, namely the top-top type, is preferably adopted for continuously and efficiently measuring fluorescence intensities of a number of samples.

For example, a plurality of rows of sample cells laterally aligned in each row are sequentially carried to a position under a plurality of fluorescence detection units laterally aligned and each comprising the projector system having a half mirror, a dichroic mirror 13, or the like disposed in the light path for the projector system to reflect the light emitted from the light source, so that the reflected light irradiates a sample cell 5 disposed under the mirror, and the receiving and measuring system which is so disposed as to guide fluorescence extracted from the sample cell 5 to the photosensor 8 disposed on the upper side, so that fluorescence intensities for every row can be detected or measured at one time. In this way, a continuous and highly efficient operation can be made.

If an elongated mercury discharge tube or an elongated fluorescent tube is used in common as the light source for a plurality of such laterally aligned fluorescence detection units, the number of parts is reduced and the structure is simplified.

When it is required to increase a lateral alignment density of sample cells, etc. in order to further improve the operation efficiency, a row of fluorescence detection units may be so disposed that each unit is opposed to every two sample cells aligned in a row at a density of two cells per one unit, with taking consideration of a limit of area in which the fluorescence detection units are installed, and then subsequently the row of the fluorescence detection units or the row of sample cells is shifted relatively in the lateral direction, so that every other cell not measured yet is opposed to every fluorescence detection unit to perform detection or measurement in the same way.

According to such an arrangement, the whole apparatus can be made further compact and cost can be reduced by the provision of a common light source. In addition, samples in one row of sample cells can be measured simultaneously. Thus, a continuous and efficient fluorescene detection or measurement can be attained.

As described above, a fluorescence detection apparatus in accordance with the present invention can effectively realize a measurement with a very small measurement error when a highly accurate measurement is required for immunoassay involving a very minute amount of a matter to be assayed. Further, the fluorescence detection apparatus can be made compact inexpensively. In addition, it is not necessary to secure a dark place for measurement. As a result, a freedom of designing clinical test equipment, etc. generally including such a fluorescence detection apparatus incorporated therein can be greatly improved. Thus, the present invention provides a great utility.

## Claims

1. A fluorescence detection apparatus for immunoassay having means for irradiating a sample (5) containing a fluorescent substance obtained by an immunoreaction with a light emitted intermittently from a light source (2, 12) at a predetermined frequency, a power source (1), means for receiving fluorescence emitted from said sample (5) for converting the received fluorescence into an electric signal to detect an intensity of said fluorescence by way of said electric signal, means for detecting said electric signal in synchronism with said frequency of intermittent irradiation; characterized in that said irradiating means has an illuminating tube (2, 12) which is intermittently energized and intermittently driven by said power source (1) being an AC or pulse power source at the duty ratio of 1:1, that said conversion means includes a plurality of units separately assigned to each sample (5) of a plurality of said samples (5) aligned in a row, and that said irradiating means is one unit disposed in common for said plurality of samples (5).

2. A fluorescence detection apparatus for immunoassay as claimed in Claim 1, characterized in that the direction of said irradiation of said sample (5) with the light emitted from said light source (12) and that of extraction of said fluorescence are the same.

3. A fluorescence detection apparatus for immunoassay as claimed in Claim 1 or 2, characterized in that said irradiating means has a single elongated illuminating tube (2, 12) having a length covering all of said samples (5) aligned in a row so that the light is irradiated in common from said light source (2, 12) to said samples (5).

4. A fluorescence detection apparatus for immunoassay as claimed in Claim 3, further comprising means (13) for splitting a light and said splitting means (13) being disposed in a light path between said samples (5) and said converting means (8) for guiding the light emitted from said illuminating tube (12) to said samples (5) through said splitting means (13), and fluorescence emitted from said samples (5) being guided to said converting means (8) through said splitting means (13).

## Patentansprüche

1. Fluoreszenzdetektorvorrichtung zur Immunprüfung, die eine Einrichtung zur Bestrahlung einer Probe (5), die eine fluoreszierende, bei einer Immunreaktion erhaltene Substanz enthält, mit einem Licht, das intermittierend von einer Lichtquelle (2, 12) bei einer vorbesitmmten Frequenz emittiert wird, eine Energiequelle (1), eine Einrichtung für den Empfang der von der Probe (5) emittierten Fluoreszenz und für die Umwandlung der empfangenen Fluoreszenz in ein elektrisches Signal, um eine Intensität der Fluoreszenz durch das elektrische Signal zu erfassen, und eine Einrichtung zur Erfassung des elektrischen Signals synchron mit der Frequenz der intermittierenden Bestrahlung aufweist; dadurch gekennzeichnet, daß die Bestrahlungseinrichtung eine Leuchtröhre (2, 12) aufweist, die durch die Energiequelle (1), die eine Wechselstromenergiequelle oder eine Impulsenergiequelle mit einem Wirkleistungsverhältnis von 1:1 ist, intermittierend gespeist und betrieben wird, daß die Umwandlungseinrichtung eine Vielzahl von Einheiten enthält, die separat jeder Probe (5) aus einer Vielzahl von den in einer Reihe ausgerichteten Proben (5) zugewiesen sind, und daß die Bestrahlungseinrichtung aus einer einzigen Einheit besteht, die gemeinsam für die Vielzahl von Proben (5) vorgesehen ist.

2. Eine Fluoreszenzdetektorvorrichtung zur Immunprüfung nach Anspruch 1, dadurch gekennzeichnet, daß die Richtung der Bestrahlung der Probe (5) mit dem von der Lichtquelle (12) ausgesendeten Licht und diejenige der Aussendung der Fluoreszenz gleich sind.

3. Eine Fluoreszenzdetektorvorrichtung zur Immunprüfung nach Anspruch 1 oder 2, dadurch gekennzeichnet, daß die Bestrahlungseinrichtung ein einzelnes längliches Beleuchtungsrohr (2, 12) umfaßt, das eine Länge aufweist, die alle der in einer Reihe ausgerichteten Proben abdeckt, so daß das Licht gemeinsam von der Lichtquelle (2, 12) auf die Proben (5) gestrahlt wird.

4. Fluoreszenzdetektorvorrichtung zur Immunprüfung nach Anspruch 3, die weiterhin eine Einrichtung (13) zur Aufspaltung eines Lichtes umfaßt und wobei die Aufspaltungseinrichtung (13) in einem Lichtweg zwischen den Proben (5) und der Umwandlungseinrichtung (8) zum Führen des von der Beleuchtungsröhre (12) ausgesendeten Lichts zu den Proben (5) durch die Aufspaltungseinrichtung (13) angeordnet ist, und die von den Proben (5) emittierte Fluoreszenz zu der Umwandlungseinrichtung (8) durch die Aufspaltungseinrichtung (13) geführt wird.

**Revendications**

1. Un appareil de détection de fluorescence pour un test immunologique comportant des moyens pour irradier un échantillon (5) contenant une substance fluorescente obtenue par une immuno-réaction, avec de la lumière émise par intermittence par une source de lumière (2, 12), à une fréquence prédéterminée, une source d'énergie (1), des moyens pour recevoir la fluorescence émise par l'échantillon (5), afin de convertir la fluorescence reçue en un signal électrique, pour détecter l'intensité de la fluorescence au moyen du signal électrique, et des moyens pour détecter le signal électrique en synchronisme avec la fréquence de l'irradiation intermittente; caractérisé en ce que les moyens d'irradiation comportent un tube d'illumination (2, 12) qui est alimenté de façon intermittente et mis en fonction de façon intermittente par la source d'énergie (1) qui consiste en une source d'énergie alternative ou impulsionnelle avec un rapport cyclique de 1:1; en ce que les moyens de conversion comprennent un ensemble d'unités qui sont affectées séparément à chaque échantillon (5) d'un ensemble d'échantillons (5) alignés en une rangée, et en ce que les moyens d'irradiation consistent en une seule unité qui est disposée en commun pour l'ensemble d'échantillons (5).

2. Un appareil de détection de fluorescence pour un test immunologique selon la revendication 1, caractérisé en ce que la direction de l'irradiation de l'échantillon (5) avec la lumière émise par la source de lumière (12), et celle de l'émission de la fluorescence sont les mêmes.

3. Un appareil de détection de fluorescence pour un test immunologique selon la revendication 1 ou 2, caractérisé en ce que les moyens d'irradiation comportent un seul tube d'illumination allongé (2, 12) ayant une longueur qui couvre tous les échantillons (5) alignés en une rangée, de façon que les échantillons (5) soient irradiés en commun par la lumière provenant de la source de lumière (2, 12).

4. Un appareil de détection de fluorescence pour un test immunologique selon la revendication 3, comprenant en outre des moyens (13) destinés à diviser un faisceau de lumière, ces moyens de division (13) étant disposés dans un chemin de la lumière entre les échantillons (5) et les moyens de conversion (8), pour guider vers les échantillons (5), à travers les moyens de division (13), la lumière qui est émise par le tube d'illumination (12), tandis que la fluorescence qui est émise par les échantillons (5) est guidée vers les moyens de conversion (8) en traversant les moyens de division (13).

FIG. 1

a   Clock Pulse

b   Lamp Voltage

c   Exciting Light

d   Fluorescent Light

e   Output

# FIG. 2

# FIG. 3